# EUROPEAN PATENT APPLICATION

(11) **EP 1 873 553 A1**
(43) Date of publication of application: **02.01.2008**
(21) Application number: 06731514.3
(22) Date of filing: 10.04.2006
(51) Int. Cl.: G01S 13/08, G08B 13/16

(54) **INTRUSION SENSOR**

(30) Priority: 11.04.2005 JP 2005113326
(71) Applicant: Optex Co., Ltd., Ohtsu-shi, Shiga-ken 520-0801 (JP)
(72) Inventor: Tsuji, Masatoshi c/o Optex Co., Ltd., Otsu-shi, Shiga; 5200101 (JP)
(74) Representative: Harland, Linda Jane
(86) International application number: PCT/JP2006/307567
(87) International publication number: WO 2006/109771

(57) **Abstract**

One embodiment is provided with a microwave sensor (1) that sends a plurality of microwaves of different frequencies toward a detection area, then outputs a reflected wave detection signal (S1) indicating whether or not there is a detection target object in the detection area based on respective reflected waves, and outputs information (Vd) of a distance to the detection target object, a distance determination means (102) for determining whether or not the distance to the detection target object is a predetermined distance or greater based on the distance information (Vd), and an alarm signal output control means (104) for performing control such that an alarm signal (Dout1) is outputted only when the distance to the detection target object is the predetermined distance or greater and when the reflected wave detection signal (S1) is indicating a presence of a detection target object.

## Description

### Technical Field

The present invention relates to intrusion detection sensors having built-in microwave sensors and particularly relates to intrusion detection sensors in which reliability is improved by avoiding as much as possible occurrences of false alarms in close range regions.

### Background Art

Conventionally, microwave sensors (for example, see Patent Document 1) in which microwaves are sent toward a detection area and when a human body (intruder) is present in the detection area, reflected waves (microwaves modulated by the Doppler Effect) from the human body are received to detect the human body are known as one type of security device.

Further still, one type of microwave sensor that has been proposed involves measuring a distance to a detection target object such as a human body present in the detection area by using a plurality of microwaves of different frequencies. This type of sensor is configured so that, for example, two types of microwaves of different frequencies are sent toward the detection area and a phase difference in two IF signals is detected based on the respective reflected waves. The phase difference correlates to the distance to the detection target object such that there is a tendency for greater phase differences to occur for greater distances to the detection target object. That is, it is possible to measure the distance to the detection target object by obtaining the phase difference. Furthermore, it is possible to determine whether or not the detection target object in the detection area is moving by recognizing change in the phase difference over time. In this way it becomes possible to identify only detection target objects that are moving in the detection area for example.

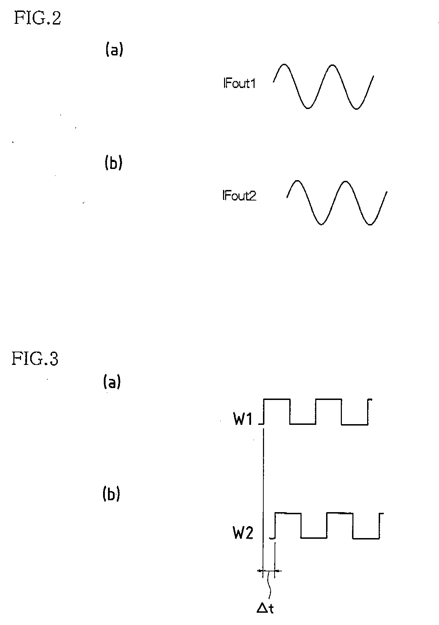

For example, when IF output signals based on reflected waves of two types of microwaves of different frequencies are sine waves IFout1 and IFout2 (having a phase difference corresponding to the distance to the detection target object) as shown in FIG. 2(a) and FIG. 2(b), rectangular waves W1 and W2 obtained by performing waveform shaping on these IF signal outputs are as shown in FIG. 3(a) and FIG. 3(b). Then, by detecting a phase difference Δφ of the rectangular waves W1 and W2 (calculated from a time difference Δt of rising portions of the rectangular waves in the diagram), it is possible to measure a distance to the detection target object. Furthermore, by recognizing change over time in the phase difference of the rectangular waves W1 and W2, it is possible to recognize movement of the detection target object in the detection area (whether it is moving toward or away from the sensor).

In this regard, problems such as the following arise when using this type of sensor as a security sensor and recognizing change over time in the phase difference to recognize only the detection target object moving in the detection area.

That is, when this type of sensor is installed outside, it is possible that a phase difference will be produced in the rectangular waves W1 and W2 by a tree or a bush or the like swaying in the wind, thus causing a false alarm by inadvertently detecting the tree or bush as a detection target object. Similarly, when this type of sensor is installed inside, it is possible that a phase difference will be produced in the rectangular waves W1 and W2 also by a rotational operation of a ventilation fan, blinds or curtains or the like swaying due to the wind, or even by vibration or the like of the microwave sensor itself, and in these cases too a false alarm is produced by inadvertently detecting an object other than a human body as a detection target object.

Accordingly, the inventor of the present invention already has proposed techniques in which false alarms are avoided by accurately distinguishing between detection target objects such as human bodies and objects that are not targeted for detection such as trees and fans and the like (see Patent Document 2).

These proposals involve measuring an amount of change per unit of time in a relative distance to an object that is present in a detection area based on reflected waves, and determining that the object is a detection target object only when the amount of change is not less than a predetermined threshold. That is, in contrast to the slight movement distance of a bush or tree swaying in the wind or a rotating fan, the movement distance is large for a detection target object such as a human body, and therefore by recognizing this difference a determination can be performed precisely as to whether or not the object is a detection target object. It should be noted that in the following description, these false alarm countermeasures are referred to as "bush/tree countermeasures" and the aforementioned threshold is referred to as "bush/tree countermeasure level."
Patent document 1: JP H07-37176A.
Patent document 2: JP 2003-207462A.

### Disclosure of Invention

### Problem to be Solved by the Invention

However, long range microwave sensors capable of performing detection up to long range intruders are easily affected by bushes or trees present particularly in a close range region since the detection sensitivity is set high. Also, sometimes there are false alarms due to the influence of an insect or the like coming close to the microwave sensor.

In light of these issues in conventional techniques, an object of the present invention is to provide an intrusion detection sensor capable of avoiding as much as possible occurrences of false alarms due to effects on built-in microwave sensors arising from the influence of trees and bushes or the like swaying in the wind, vibration of the microwave sensor itself, or by insects or the like coming close to the microwave sensor, and to improve operational reliability.

### Means for Solving Problem

In order to achieve this object, an intrusion detection sensor according to the present invention is provided with a microwave sensor that sends a plurality of microwaves of different frequencies toward a detection area, then outputs a reflected wave detection signal indicating whether or not there is a detection target object in the detection area based on reflected waves of the respective microwaves from the detection target object present in the detection area, and outputs detection target object distance information corresponding to a distance to the detection target object, a distance determination means for determining whether or not the distance to the detection target object is a predetermined distance or greater based on the detection target object distance information outputted from the microwave sensor, and an alarm signal output control means for performing control such that an alarm signal is outputted only when the distance determination means determines that the distance to the detection target object is the predetermined distance or greater and further when the reflected wave detection signal is indicating a presence of a detection target object.

Here, it is necessary that the predetermined distance is determined so that a detection area formed by the microwave sensor has a certain width or greater in any direction.

With the thus-configured intrusion detection sensor, the alarm signal is not outputted when the distance to the detection target object is less than the predetermined distance. This enables false alarms or the like in the close range region to be avoided as much as possible and increases operational reliability.

Alternatively, an intrusion detection sensor may be provided with a microwave sensor that sends a plurality of microwaves of different frequencies toward a detection area, then outputs detection target object distance information corresponding to a distance to the detection target object based on reflected waves of the respective microwaves from the detection target object present in the detection area, a distance determination means for determining whether or not the distance to the detection target object is a predetermined distance or greater based on the detection target object distance information outputted from the microwave sensor, a distance change amount determination means for measuring an amount of change per unit of time in the distance to the detection target object based on the detection target object distance information outputted from the microwave sensor and determining whether or not that amount of change is a predetermined amount or greater, and an alarm signal output control means for performing control such that an alarm signal is outputted only when the distance determination means determines that the distance to the detection target object is the predetermined distance or greater and further when the distance change amount determination means determines that the amount of change is the predetermined amount or greater.

Here, it is necessary that the predetermined distance is determined so that a detection area formed by the microwave sensor has a certain width or greater in any direction.

With the thus-configured intrusion detection sensor, the alarm signal is not outputted when the distance to the detection target object is less than the predetermined distance or when the amount of change per unit of time in the distance to the detection target object is less than the predetermined amount. This enables false alarms or the like in the close range region to be avoided as much as possible and increases operational reliability.

Alternatively, an intrusion detection sensor may be provided with a microwave sensor that sends a plurality of microwaves of different frequencies toward a detection area, then outputs a reflected wave detection signal indicating whether or not there is a detection target object in the detection area based on reflected waves of the respective microwaves from the detection target object present in the detection area, and outputs detection target object distance information corresponding to a distance to the detection target object, a distance determination means for determining whether or not the distance to the detection target object is a predetermined distance or greater based on the detection target object distance information outputted from the microwave sensor, a passive-type infrared sensor that receives infrared rays from within the detection area and outputs an infrared detection signal that indicates whether or not there is a detection target object in the detection area based on a temperature difference to a surrounding area, and an alarm signal output control means for performing control so that, in a case where the distance determination means determines that the distance to the detection target object is the predetermined distance or greater, an alarm signal is outputted only when the reflected wave detection signal and the infrared detection signal both indicate a presence of a detection target object, and in a case where the distance determination means determines that the distance to the detection target object is less than the predetermined distance, the alarm signal is outputted when the infrared detection signal indicates a presence of a detection target object.

With the thus-configured intrusion detection sensor, in a case where the distance to the detection target object is the predetermined distance or greater, very reliable detection can be carried out by outputting the alarm signal only when both the microwave sensor and the passive-type infrared sensor are detecting the detection target object. Furthermore, also in a case where the distance to the detection target object is less than the predetermined distance, detection is carried out only by the passive-type infrared sensor. This enables very reliable detection and prevention against acts of interference such as masking while avoiding false alarms or the like as much as possible.

Alternatively, an intrusion detection sensor may be provided with a first microwave sensor that sends a plurality of microwaves of different frequencies toward a first detection area, then outputs a first reflected wave detection signal indicating whether or not there is a detection target object in the first detection area based on reflected waves of the respective microwaves from the detection target object present in the first detection area, and outputs detection target object distance information corresponding to a distance to the detection target object, a distance determination means for determining whether or not the distance to the detection target object is a predetermined distance or greater based on the detection target object distance information outputted from the first microwave sensor, a second microwave sensor that sends a plurality of microwaves of different frequencies toward a second detection area that is set on a closer range side than the first detection area, then outputs a second reflected wave detection signal indicating whether or not there is a detection target object in the second detection area based on reflected waves of the respective microwaves from the detection target object present in the second detection area, and an alarm signal output control means for performing control so that, when the distance determination means determines that the distance to the detection target object is the predetermined distance or greater, an alarm signal is outputted only when the first reflected wave detection signal indicates a presence of a detection target object, and when the second reflected wave detection signal indicates a presence of a detection target object, the alarm signal is outputted regardless of a determination result of the distance determination means.

With the thus-configured intrusion detection sensor, by combining the long range first microwave sensor and the short range second microwave sensor having appropriate settings respectively, very reliable detection and prevention against acts of interference such as masking become possible while avoiding false alarms or the like as much as possible.

### Effects of the Invention

With an intrusion detection sensor according to the present invention, very reliable detection and prevention against acts of interference such as masking become possible while avoiding false alarms or the like as much as possible and operational reliability can be improved.

### Brief Description of Drawings

FIG. 1 is a schematic diagram of a circuit configuration of an intrusion detection sensor according to a first embodiment of the present invention.
FIG. 2(a) and FIG. 2(b) are waveform diagrams of IF output signals in a dual frequency type microwave sensor, with FIG. 2(a) showing one IFout1 and FIG. 2(b) showing the other IFout2.
FIG. 3(a) and FIG. 3(b) are waveform diagrams of rectangular waves obtained by performing waveform shaping on the IF output signals of FIG. 2, with FIG. 3(a) showing one rectangular wave W1 and FIG. 3(b) showing the other rectangular wave W2.
FIG. 4(a) and FIG. 4(b) are schematic explanatory diagrams of a detection area formed by the intrusion detection sensor according to the first embodiment of the present invention, with FIG. 4(a) being a side view and FIG. 4(b) a top view.
FIG. 5 is a schematic drawing of a circuit configuration of an intrusion detection sensor according to a second embodiment of the present invention.
FIG. 6 is a schematic drawing of a circuit configuration of an intrusion detection sensor according to a third embodiment of the present invention.
FIG. 7 is a schematic explanatory diagram (side view) of a detection area formed by the intrusion detection sensor according to the third embodiment of the present invention.
FIG. 8 is a schematic drawing of a circuit configuration of an intrusion detection sensor according to a fourth embodiment of the present invention.
FIG. 9 is a schematic process flowchart carried out in the one-chip microcomputer of the intrusion detection sensor according to the fourth embodiment of the present invention.

### Description of Reference Numerals

- 1: microwave sensor
- 2: RF module
- 21: oscillator
- 22: modulator
- 23: transmitting antenna
- 24: receiving antenna
- 25: mixer
- 3: signal processing portion
- 31: power source
- 32: power source
- 33: power source
- 34: IF amplifier
- 35: IF amplifier
- 36: comparator
- 37: comparator
- 41: distance recognition means
- 42: object determination means
- 50: ground surface
- 51: wall surface
- 52: intruder
- 100: intrusion detection sensor (first embodiment)
- 101: output control circuit
- 102: comparator
- 103: power source
- 104: AND gate (2 input)
- 200: intrusion detection sensor (second embodiment)
- 201: output control circuit
- 202: comparator
- 203: power source
- 204: inverter
- 205: AND gate (3 input)
- 206: AND gate (2 input)
- 207: OR gate (2 input)
- 300: intrusion detection sensor (third embodiment)
- 301: output control circuit
- 302: comparator
- 303: power source
- 304: AND gate (2 input)
- 305: OR gate (2 input)
- 400: intrusion detection sensor (fourth embodiment)
- 401: one-chip microcomputer

### Best Mode for Carrying Out the Invention

Hereinafter, embodiments of the present invention are described with reference to the accompanying drawings.

### <First Embodiment>

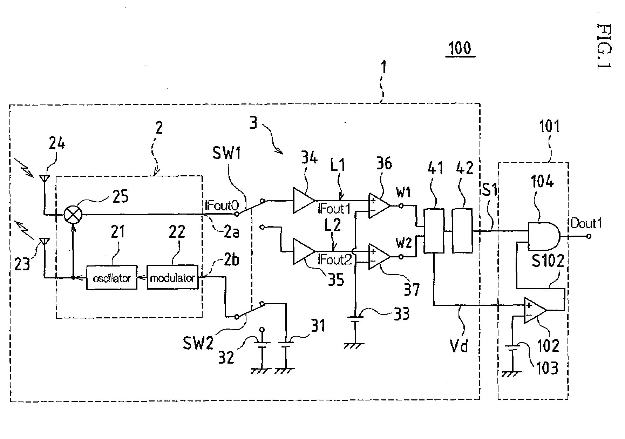

FIG. 1 is a schematic diagram of a circuit configuration of an intrusion detection sensor 100 according to a first embodiment of the present invention. FIG. 2(a) and FIG. 2(b) are waveform diagrams of IF output signals in a dual frequency type microwave sensor 1, with FIG. 2(a) showing one IFout1 and FIG. 2(b) showing the other IFout2. FIG. 3(a) and FIG. 3(b) are waveform diagrams of rectangular waves obtained by performing waveform shaping on the IF output signals, with FIG. 3(a) showing one rectangular wave W1 and FIG. 3(b) showing the other rectangular wave W2.

As shown in FIG. 1, the intrusion detection sensor 100 is provided with a microwave sensor 1 having an RF module 2 and a signal processing portion 3, and an output control circuit 101 that controls output of an alarm signal Dout1 based on output from the microwave sensor 1.

The RF module 2 is provided with an oscillator 21 that oscillates microwaves, a modulator 22 for switching frequencies of the microwaves oscillated from the oscillator 21, a transmitting antenna 23 that transmits the microwaves oscillated from the oscillator 21 toward a detection area, a receiving antenna 24 that receives reflected waves of microwaves reflected by an object such as a human body, and a mixer 25 that mixes for output the received microwaves and voltage waveforms of the oscillator 21. That is, when an object is present in the detection area, the microwaves sent toward the detection area from the transmitting antenna 23 are received at the receiving antenna 24 with the frequencies of the reflected waves from the object being modulated due to the Doppler Effect. After the received reflected waves undergo mixing with voltage waveforms of the oscillator 21 by the mixer 25, they are outputted to the signal processing portion 3 as an IF output signal (IFout0) from an output side 2a of the RF module 2.

On the other hand, the signal processing portion 3 is provided with a first output line L1 having an IF amplifier 34 and a comparator 36, and a second output line L2 having an IF amplifier 35 and a comparator 37, which respond to each microwave of each frequency sent from the transmitting antenna 23, and a power source 33 that is a reference voltage for the comparators 36 and 37. Further still, power sources 31 and 32 are provided to enable the RF module 2 to oscillate the two types of microwaves, and a distance recognition means 41 and an object determination means 42 are provided on an output side of the comparators 36 and 37. It should be noted that each of these means is described later.

The IF amplifiers 34 and 35 are connected to the output side 2a of the RF module 2 via a first switch SW1. The first switch SW1 is switchable such that, when one of the aforementioned two types of microwaves is being sent from the transmitting antenna 23, it connects to the first output line L1, and when the other microwave is being sent from the transmitting antenna 23, it connects to the second output line L2. In other words, this is configured so that when one of the microwaves is being sent, the IF output signal pertaining to reflected waves reflected by an object are outputted to the first output line L1, and when the other of the microwaves is being sent, the IF output signal pertaining to reflected waves reflected by the object are outputted to the second output line L2.

Furthermore, the power sources 31 and 32 are connected to an input side 2b of the RF module 2 via a second switch SW2 that is linked to the first switch SW1. This second switch SW2 is also configured so that its connection state with respect to the power sources 31 and 32 switches depending on which microwave of the two types of microwaves is being sent from the transmitting antenna 23. In other words, this is configured so that the modulator 22 switches the microwave frequency between a state in which the second switch SW2 is connected to the power source 31 on the one hand and a state in which it is connected to the power source 32 on the other hand, and this enables the frequency of the microwaves sent from the transmitting antenna 23 to be switched.

In this manner, accompanying a switching operation of the first switch SW1 and the second switch SW2, two processing operations (a first processing operation and a second processing operation) are configured to be switchable having a predetermined time interval (for example, an interval of several milliseconds). Here, "first processing operation" refers to an operation in which microwaves of one of the frequencies is sent from the transmitting antenna 23 toward the detection area, then based on reflected waves thereof, an IF output signal is outputted to the first output line L1 of the signal processing portion 3 and signal processing is carried out in the first output line L1. And "second processing operation" refers to an operation in which microwaves of the other of the frequencies is sent from the transmitting antenna 23 toward the detection area, then based on reflected waves thereof, an IF output signal is outputted to the second output line L2 of the signal processing portion 3 and signal processing is carried out in the second output line L2. And in the first processing operation, the IF output signal outputted from the RF module 2 is amplified by the IF amplifier 34, and after the output (IFout1) from the IF amplifier 34 is formed into a rectangular wave W1 by the comparator 36, the rectangular wave W1 is outputted to the distance recognition means 41. The second processing operation is similarly configured such that the IF output signal outputted from the RF module 2 is amplified by the IF amplifier 35, and after the output (IFout2) from the IF amplifier 35 is formed into a rectangular wave W2 by the comparator 37, the rectangular wave W2 is outputted to the distance recognition means 41.

It should be noted that when no object is present in the detection area, the microwave frequency sent from the transmitting antenna 23 and the microwave frequency received at the receiving antenna 24 are equivalent, and therefore the IF frequency in the output signals from the IF amplifiers 34 and 35 are "0," and no signal is outputted from the comparators 36 and 37. In contrast to this, when an object is present in the detection area, the microwave frequency received at the receiving antenna 24 has undergone modulation and is different from the microwave frequency sent from the transmitting antenna 23, and therefore a change is produced in the output signal waveforms of the comparators 36 and 37 such that the rectangular wave W1 and the rectangular wave W2 are outputted to the distance recognition means 41.

The distance recognition means 41 receives the output signal waveforms from the comparators 36 and 37 and determines a relative distance to the object present in the detection area based on these output signal waveforms. That is, this is configured so that the relative distance to the object is measured based on a phase difference between the reflected waves of the microwaves from the object present in the detection area. As mentioned earlier, the phase difference between the two IF output signals (IFout1 and IFout2) correlates to the distance to the object such that there is a tendency for greater phase differences to occur for greater distances to the object. Consequently, if data pertaining to the relationship between the distance to the object and the phase difference is stored in advance for example, the distance to the object can be obtained from the phase difference based on that data. Then, distance information that has been obtained in this manner is outputted to the object determination means 42.

The distance recognition means 41 is further configured so that the distance to the object obtained in the aforementioned manner is converted to a voltage Vd and outputted. Here, the voltage Vd has undergone conversion so that the voltage is higher for greater distances.

The object determination means 42 is configured to receive the output of the distance recognition means 41 and obtain a movement distance per unit of time of an object by measuring an amount of change per unit of time in the relative distance to the object, and also to carry out a determination based on a result thereof as to whether or not it is a detection target object such as a human body. That is, when the amount of change (the movement distance of the object) is small compared to a preset threshold corresponding to the relative distance to the object, the object is determined not to be a detection target object such as a human body but rather a tree or bush swaying in the wind for example, and an object detection signal S1 outputted from the object determination means 42 becomes low level. On the other hand, when the aforementioned amount of change is greater than the threshold, the object is determined to be a detection target object and the object detection signal S1 becomes high level.

Furthermore, the output control circuit 101 is constituted by a comparator 102, a power source 103, and an AND gate 104.

A non-inverting input terminal of the comparator 102 is connected so the voltage Vd outputted from the distance recognition means 41 is inputted, and an inverting input terminal of the comparator 102 is connected to the power source 103 that is a reference voltage corresponding to a predetermined distance d1. In this way, when the distance to the object is not less than the distance d1, an output signal S102 from the comparator 102 becomes high level, and when the distance to the object is less than the distance d1, the output signal S102 becomes low level.

The object detection signal S1 and the output signal S102 are connected respectively to the two input terminals of the AND gate 104. Here, an output form of the AND gate 104 is set as an open drain or an open collector. In this way, when the object detection signal S1 and the output signal S102 are both high level, the output of the AND gate 104 as the alarm signal Dout1 becomes ON, and in cases other than this, the output as the alarm signal Dout1 becomes open. It should be noted that the output form of the AND gate 104 is not limited to this and the output form may be changed in accordance with the connection destination for example.

With the above-described configuration, when the distance to the object is not less than the distance d1, the output signal S102 becomes high level, and therefore the output state of the object detection signal S1 is reflected as it is in the output of the alarm signal Dout1. On the other hand, when the distance to the object is less than the distance d1, the output signal S102 becomes low level, and therefore the output of the alarm signal Dout1 remains open regardless of the output state of the object detection signal S1. That is, when the distance to the object is less than the distance d1, the output of the alarm signal Dout1 does not go ON even if the microwave sensor 1 detects a detection target object. By doing this, false alarms or the like in the close range region can be avoided as much as possible while maintaining as it is the intruder detection function in mid to long range regions.

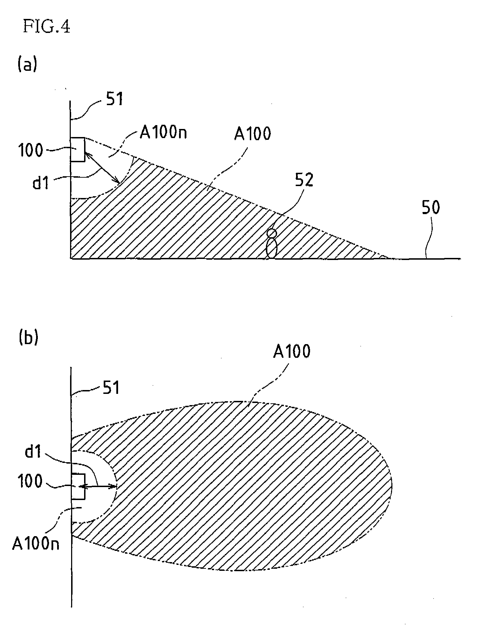

FIG. 4(a) and FIG. 4(b) are schematic explanatory diagrams of a detection area A100 formed by the intrusion detection sensor 100 according to the first embodiment of the present invention, with FIG. 4(a) being a side view and FIG. 4(b) a top view.

As shown in FIG. 4(a) and FIG. 4(b), the intrusion detection sensor 100 is arranged on a wall surface 51 or the like in a position of a fixed height from a ground surface 50. Viewed laterally, the detection area A100 is formed as a substantially right-angled triangle in a region from a direction looking diagonally down a position apart from the installation position to a direction almost directly below the installation position, and viewed from above it is formed in a shape resembling an oval.

However, as described above, when the distance to the object is less than the distance d1, the output of the alarm signal Dout1 does not go ON even if the intrusion detection sensor 100 detects a detection target object, and therefore object detection is not carried out in a close range area A100n inside a region of the distance d1 from the intrusion detection sensor 100. Consequently, the effectively valid region of detection area A100 is the area shown by diagonal lines in the diagrams.

It should be noted that when this is set so that no detection for objects is carried out in the close range area A100n in the region of the distance d1 from the intrusion detection sensor 100, it can be anticipated that there is a risk that even though an act of interference such as masking is performed on the intrusion detection sensor 100, the act will not be recognized, thus resulting in a missed alarm. However, as a prerequisite for carrying out an act of interference on the intrusion detection sensor 100, it is necessary to approach the intrusion detection sensor 100 from an outside area. Consequently, after an intruder 52 intrudes into the detection area A100, it is possible to detect this and perform an alarm at a stage prior to entrance into the close range area A100n, and since this itself prevents an act of interference being carried out, it can be thought that ordinarily a problem of a missed alarm due to an act of interference will not occur.

Note however that when the distance d1 is set very large and the close range area A100n expands too much, the detection area A100 that reaches to the wall surface 51 in FIG. 4(b) will no longer reach until the wall surface 51 and there is a possibility that the intruder 52 intruding along the wall surface 51 cannot be detected, and therefore it is necessary to set the distance d1 to an appropriate value in consideration of this point.

### <Second Embodiment>

Hereinafter description is given of an intrusion detection sensor as a second embodiment in which by combining a passive-type infrared sensor (PIR sensor) with a microwave sensor, an alarm signal is outputted only when an object is detected by both the microwave sensor and the passive-type infrared sensor in the mid to long range regions, and in the close range region an alarm signal is outputted when the passive-type infrared sensor has detected an object. It should be noted that points other than those discussed below are the same as in the first embodiment, and therefore same reference numerals are applied to same structural members and description is given mainly concerning points of difference.

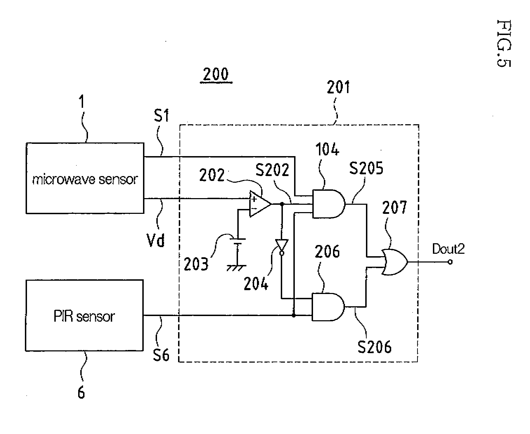

FIG. 5 is a schematic drawing of a circuit configuration of an intrusion detection sensor 200 according to a second embodiment of the present invention. As shown in the diagram, the intrusion detection sensor 200 is provided with the above-described microwave sensor 1, a passive-type infrared sensor 6 that receives infrared rays from inside the detection area and outputs an infrared detection signal S6 (which is high level when a detection target object is present and low level when not present) indicating a presence/absence of a detection target object based on a temperature difference to a surrounding area, and an output control circuit 201 that controls output of an alarm signal Dout2 based on output from the microwave sensor 1 and the passive-type infrared sensor 6.

The output control circuit 201 is constituted by a comparator 202, a power source 203, an inverter 204, a 3-input AND gate 205, a 2-input AND gate 206, and a 2-input OR gate 207.

A non-inverting input terminal of the comparator 202 is connected so the voltage Vd outputted from the microwave sensor 1 is inputted, and an inverting input terminal of the comparator 202 is connected to the power source 203, which is a reference voltage corresponding to the predetermined distance d1. In this way, when the distance to the object is not less than the distance d1, an output signal S202 from the comparator 202 becomes high level, and when the distance to the object is less than the distance d1, the output signal S202 becomes low level.

The three input terminals of the AND gate 205 are connected respectively to the object detection signal S1 outputted from the microwave sensor 1, the output signal S202, and the infrared detection signal S6 outputted from the passive-type infrared sensor 6. Furthermore, the two input terminals of the AND gate 206 are connected respectively to an output signal in which the output signal S202 is inverted by the inverter 204, and the infrared detection signal S6 outputted from the passive-type infrared sensor 6. Further still, the two input terminals of the OR gate 207 are connected respectively to an output signal S205 of the AND gate 205 and an output signal S206 of the AND gate 206. Here, an output form of the OR gate 207 is set as an open drain or an open collector. Note however that the output form of the OR gate 207 is not limited to this and the output form may be changed in accordance with the connection destination for example.

By configuring in this manner, when the distance to the object is not less than the distance d1, the output signal S202 becomes high level and the output of the inverter 204 becomes low level. For this reason, the output signal S205 of the AND gate 205 becomes high level only when both the object detection signal S1 and the infrared detection signal S6 are high level, and becomes low level at other times. The output signal S206 of the AND gate 206 is ordinarily low level. Consequently, the output state of the output signal S205 is reflected as it is in the output of the OR gate 207 as the alarm signal Dout2.

On the other hand, when the distance to the object is less than the distance d1, the output signal S202 becomes low level and the output of the inverter 204 becomes high level. For this reason, the output signal S205 of the AND gate 205 is ordinarily low level. The output state of the infrared detection signal S6 is reflected as it is in the output signal S206 of the AND gate 206. Consequently, the output state of the output signal S206 is reflected as it is in the output of the OR gate 207 as the alarm signal Dout2, which is to say that this is equivalent to the output state of the infrared detection signal S6 being reflected.

With the configuration of the above-described second embodiment, detection target objects are very reliably detected in the mid to long range regions by so-called AND detection by the microwave sensor 1 and the passive-type infrared sensor 6, and in the close range region detection is carried out only by the passive-type infrared sensor 6 so that very reliable detection and prevention against acts of interference such as masking become possible while avoiding false alarms or the like as much as possible.

It should be noted that the detection area formed by the intrusion detection sensor 200 is substantially the same as the detection area A100 (see FIG. 4(a) and FIG. 4(b)) of the intrusion detection sensor 100 according to the first embodiment, but detection is carried out by the passive-type infrared sensor 6 also in the close range area A100n within the range of the distance d1 from the intrusion detection sensor.

### <Third Embodiment>

Hereinafter description is given of an intrusion detection sensor as a third embodiment that is configured by combining, in addition to a long range microwave sensor, a separate short range microwave sensor. It should be noted that points other than those discussed below are the same as in the first embodiment, and therefore same reference numerals are applied to same structural members and description is given mainly concerning points of difference.

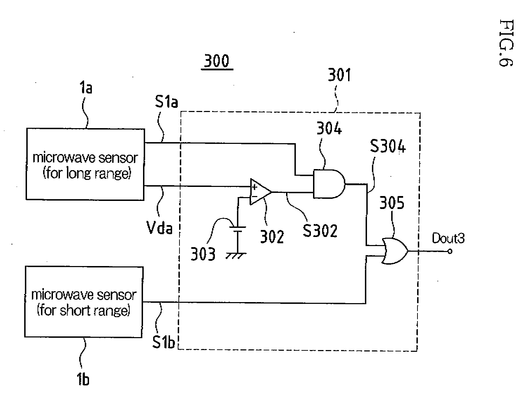

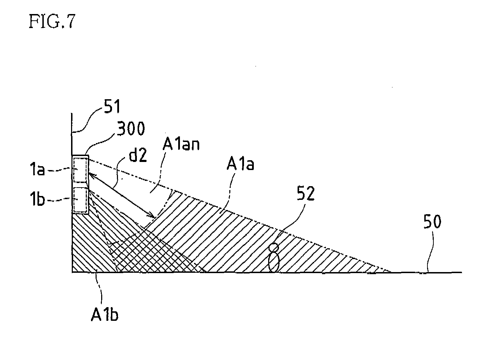

FIG. 6 is a schematic drawing of a circuit configuration of an intrusion detection sensor 300 according to a third embodiment of the present invention. FIG. 7 is a schematic explanatory diagram (side view) of a detection area formed by the intrusion detection sensor 300.

As shown in these diagrams, the intrusion detection sensor 300 is provided with a microwave sensor 1a that forms a long range detection area A1 a, a short range microwave sensor 1b that forms a detection area A1b on a side closer to the intrusion detection sensor 300 than the detection area A1a, and an output control circuit 301 that controls the output of an alarm signal Dout3 based on the output from the microwave sensor 1a and the microwave sensor 1b.

Here, aspects such as the configuration of the microwave sensor 1a and the microwave sensor 1b are substantially the same as the microwave sensor 1 that was described in the first embodiment. However, as shown in FIG. 7, the region in which the detection area A1a is formed by the microwave sensor 1a is slightly restricted so that it does not extend in a direction substantially directly below the installation position. A threshold value for restricting an object detection distance may be set larger than the distance d1 that was set in the first embodiment. This is because objects in the close range region and acts of interference such as masking are reliably detected by the short range microwave sensor 1b, and therefore consideration may be given exclusively to a perspective of preventing false alarms. Furthermore, the detection area A1b of the microwave sensor 1b is set to a region from a direction looking diagonally down a position comparatively close to the installation location to a direction substantially directly below the installation position. Further still, it is not necessary for the microwave sensor 1b to detect for long range objects, and therefore its detection sensitivity is set lower than a long range setting. It should be noted in regard to the output signals from the microwave sensor 1a that an object detection signal S1a and a voltage Vda are used, but only an object detection signal S1b is used for the output signals from the microwave sensor 1b.

The output control circuit 301 is constituted by a comparator 302, a power source 303, a 2-input AND gate 304, and a 2-input OR gate 305.

A non-inverting input terminal of the comparator 302 is connected so the voltage Vda outputted from the microwave sensor 1a is inputted, and an inverting input terminal of the comparator 302 is connected to the power source 203, which is a reference voltage corresponding to a predetermined distance d2. In this way, when the distance to the object is not less than the distance d2, an output signal S302 from the comparator 302 becomes high level, and when the distance to the object is less than the distance d2, the output signal S302 becomes low level.

The object detection signal S1a outputted from the microwave sensor 1a and the output signal S302 are connected respectively to the two input terminals of the AND gate 304. Furthermore, the two input terminals of the OR gate 305 are connected respectively to an output signal S304 of the AND gate 304 and the object detection signal S1b outputted from the microwave sensor 1b. Here, an output form of the OR gate 305 is set as an open drain or an open collector. Note however that the output form of the OR gate 305 is not limited to this and the output form may be changed in accordance with the connection destination for example.

By configuring in this manner, when the distance to the object is not less than the distance d2, the output signal S302 becomes high level, and therefore the output state of the object detection signal S1a is reflected as it is in the output signal S304 of the AND gate 304, and if the object detection signal S1a is also high level, then the output of the OR gate 305 as the alarm signal Dout3 becomes ON. Furthermore, if the object detection signal S1b is high level, then the output of the OR gate 305 as the alarm signal Dout3 becomes ON regardless of the output of the object detection signal S1a and the voltage Vda.

As shown in FIG. 7, the detection area formed by the intrusion detection sensor 300 becomes a combined region of a region in which a close range area Alan within a range of the distance d2 from the intrusion detection sensor 300 is excluded from the detection area A1a of the long range microwave sensor 1a, and the detection area A1 b of the close range microwave sensor 1b.

With the configuration of the third embodiment described above, by combining a long range microwave sensor and a short range microwave sensor having appropriate settings respectively, very reliable detection and prevention against acts of interference such as masking become possible while avoiding false alarms or the like as much as possible.

### <Fourth Embodiment>

Hereinafter description is given of an intrusion detection sensor as a fourth embodiment that is configured such that a portion of the circuits of the microwave sensor 1 and the output control circuit 101 of the first embodiment are replaced by software processing on a one-chip microcomputer for device embedding and further making combined use of the aforementioned "bush/tree countermeasures." It should be noted that points other than those discussed below are the same as in the first embodiment, and therefore same reference numerals are applied to same structural members and description is given mainly concerning points of difference.

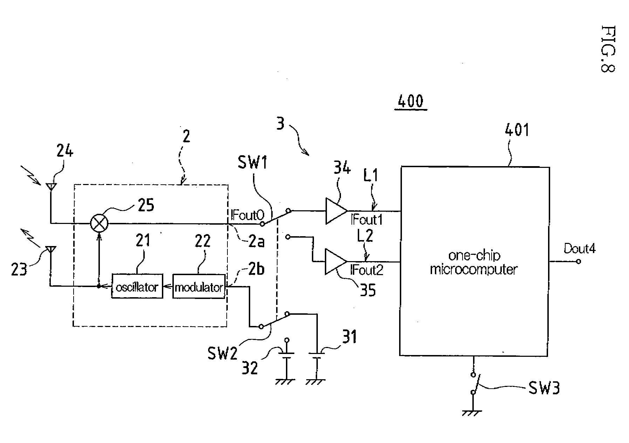

FIG. 8 is a schematic drawing of a circuit configuration of an intrusion detection sensor 400 according to a fourth embodiment of the present invention. As shown in the diagram, the RF module 2 is the same as in the first embodiment, and the signal processing portion 3 is in common with the first embodiment up to the IF amplifier 34 and IF amplifier 35. In the fourth embodiment, functioning equivalent to the various signal processes and computations by from the comparator 36 and the comparator 37 onward and the output control circuit 101 of the first embodiment are all achieved by software processing in a one-chip microcomputer 401. It should be noted that a detection area formed by the intrusion detection sensor 400 is the same as the detection area A100 (see FIG. 4(a) and FIG. 4(b)) by the intrusion detection sensor 100 according to the first embodiment.

The one-chip microcomputer 401 has input ports, A/D input ports, and output ports. The output (IFout1) from the IF amplifier 34 and the output (IFout2) from the IF amplifier 35 are respectively connected to the A/D input ports. An alarm signal Dout4 outputted from the output port becomes ON when a detection target object has been detected.

Furthermore, the intrusion detection sensor 400 is provided with a bush/tree countermeasure switch SW3 to enable it to be remotely switchable between execution and non-execution of the aforementioned "bush/tree countermeasures," and the bush/tree countermeasure switch SW3 is connected to the input port of the one-chip microcomputer 401. Here, examples that can be offered for the bush/tree countermeasure switch SW3 include a DIP switch or a jumper switch for example, and may be configured at a time of installing the intrusion detection sensor 400 to be able to be operated by opening a cover, but there is no limitation to this configuration.

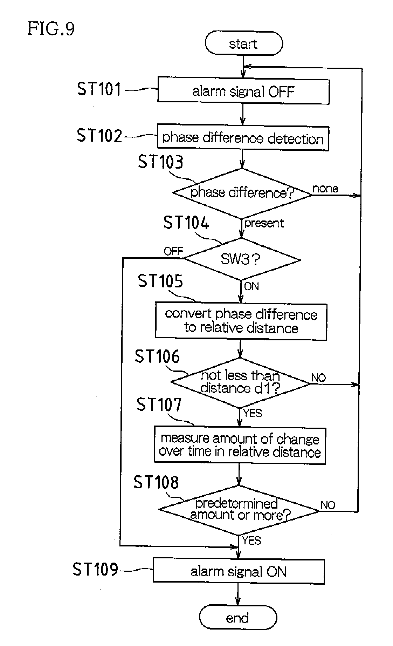

FIG. 9 is a schematic process flowchart carried out in the one-chip microcomputer 401 of the intrusion detection sensor 400 according to the fourth embodiment of the present invention.

As shown in FIG. 9, at the beginning of processing, the alarm signal Dout4 is initialized to be OFF (step ST101) Next, phase difference between the IFout1 and the IFout2 is detected (step ST102). Then a determination is carried out (step ST103) as to whether or not there is a phase difference, and if a phase difference is detected, then the procedure proceeds to a next step, step ST104, otherwise the procedure returns to step ST101.

Next, the state of the bush/tree countermeasure switch SW3 is detected (step ST104), and if the bush/tree countermeasure switch SW3 is ON, then the procedure proceeds to step ST105 to execute the "bush/tree countermeasures" and prohibit detection of detection target objects in the close range region. If the bush/tree countermeasure switch SW3 is OFF, then the "bush/tree countermeasures" and prohibition of detection of detection target objects in the close range region are not carried out, and therefore the procedure proceeds to step ST109 and processing finishes after turning ON the alarm signal Dout4.

When the bush/tree countermeasure switch SW3 is ON, calculations are carried out (step ST105) for converting the detected phase difference to a relative distance from the intrusion detection sensor 400. Then, the relative distance obtained by these calculations is compared (step ST106) to the predetermined distance d1, and when it is not less than the distance d1, the procedure proceeds to the next step, step ST107, and when it is less than the distance d1, the probability of a false alarm is high and therefore the procedure returns to step ST101.

When the relative distance is not less than the distance d1, the amount of change per unit of time in the relative distance is measured (step ST107) to enable execution of the "bush/tree countermeasures." Then, a determination is carried out (step ST108) as to whether or not the measured amount of change per unit of time in the relative distance is not less than a predetermined amount, and when it is not less than a predetermined amount, then the procedure proceeds to the next step, step ST109 and processing finishes after turning ON the alarm signal Dout4. If this is not greater than the predetermined amount, then the probability of an effect of a bush or tree or the like is high and therefore the procedure returns to step ST101.

With the configuration of the fourth embodiment as described above, when a setting is made to implement the "bush/tree countermeasures" by the bush/tree countermeasure switch SW3, in addition to effects such as those of bushes or trees swaying in the wind or a fan rotating not being received as much as possible, it is further possible to not perform detection of close range region objects as detection target objects. In this way, false alarms or the like in the close range region can be avoided as much as possible while maintaining as it is the intruder detection function in mid to long range regions, and the operational reliability as an intrusion detection sensor can be increased even further. Furthermore, by using the switching of the bush/tree countermeasure switch SW3, it is possible to not carry out such processing, and therefore it becomes possible to carry out optimal warning operations suited to the installation location and conditions.

### <Other Embodiments>

Application of the present invention is not limited to a microwave sensor configured to determine detection target objects using two types of microwaves of different frequencies and may be applied to a microwave sensor configured to determine detection target objects using three types or more of microwaves of different frequencies. A microwave sensor and a passive-type infrared sensor were combined in the second embodiment, but it is also possible to instead use a type of sensor that detects relative distances to detection targets, for example an ultrasonic wave sensor or the like.

Furthermore, some of the circuits in the above-described microwave sensor and the output control circuits and the like can also be easily achieved by a programmable logic device (PLD) or a field programmable gate array (FPGA) or the like for example.

The present invention can be embodied and practiced in other different forms without departing from the spirit and essential characteristics thereof. Therefore, the above-described embodiments are considered in all respects as illustrative and not restrictive. The scope of the invention is indicated by the appended claims rather than by the foregoing description. All variations and modifications falling within the equivalency range of the appended claims are intended to be embraced therein.

It should be noted that this application claims priority on Patent Application No. 2005-113326 filed in Japan on April 11, 2005, the entire contents of which are hereby incorporated by reference. Furthermore, documents cited in this specification are hereby specifically incorporated in their entirety by reference.

### Industrial Applicability

The present invention may be suitably applied to security sensors or the like such as microwave sensors that detect an intruder using microwaves and a combination of a passive-type infrared sensor, which detects infrared rays emitted from an intruder, and a microwave sensor.

## Claims

1. An intrusion detection sensor comprising:
a microwave sensor that sends a plurality of microwaves of different frequencies toward a detection area, then outputs a reflected wave detection signal indicating whether or not there is a detection target object in the detection area based on reflected waves of the respective microwaves from the detection target object present in the detection area, and outputs detection target object distance information corresponding to a distance to the detection target object,
a distance determination means for determining whether or not the distance to the detection target object is a predetermined distance or greater based on the detection target object distance information outputted from the microwave sensor, and
an alarm signal output control means for performing control such that an alarm signal is outputted only when the distance determination means determines that the distance to the detection target object is the predetermined distance or greater and further when the reflected wave detection signal is indicating a presence of a detection target object.

2. An intrusion detection sensor comprising:
a microwave sensor that sends a plurality of microwaves of different frequencies toward a detection area, then outputs detection target object distance information corresponding to a distance to the detection target object based on reflected waves of the respective microwaves from the detection target object present in the detection area.
a distance determination means for determining whether or not the distance to the detection target object is a predetermined distance or greater based on the detection target object distance information outputted from the microwave sensor,
a distance change amount determination means for measuring an amount of change per unit of time in the distance to the detection target object based on the detection target object distance information outputted from the microwave sensor and determining whether or not that amount of change is a predetermined amount or greater, and
an alarm signal output control means for performing control such that an alarm signal is outputted only when the distance determination means determines that the distance to the detection target object is the predetermined distance or greater and further when the distance change amount determination means determines that the amount of change is the predetermined amount or greater.

3. The intrusion detection sensor according to claim 1 or 2,
wherein the predetermined distance is determined so that a detection area formed by the microwave sensor has a certain width or greater in any direction.

4. An intrusion detection sensor comprising:
a microwave sensor that sends a plurality of microwaves of different frequencies toward a detection area, then outputs a reflected wave detection signal indicating whether or not there is a detection target object in the detection area based on reflected waves of the respective microwaves from the detection target object present in the detection area, and outputs detection target object distance information corresponding to a distance to the detection target object,
a distance determination means for determining whether or not the distance to the detection target object is a predetermined distance or greater based on the detection target object distance information outputted from the microwave sensor,
a passive-type infrared sensor that receives infrared rays from within the detection area and outputs an infrared detection signal that indicates whether or not there is a detection target object in the detection area based on a temperature difference to a surrounding area, and
an alarm signal output control means for performing control so that, in a case where the distance determination means determines that the distance to the detection target object is the predetermined distance or greater, an alarm signal is outputted only when the reflected wave detection signal and the infrared detection signal both indicate a presence of a detection target object, and in a case where the distance determination means determines that the distance to the detection target object is less than the predetermined distance, the alarm signal is outputted when the infrared detection signal indicates a presence of a detection target object.

5. An intrusion detection sensor comprising:
a first microwave sensor that sends a plurality of microwaves of different frequencies toward a first detection area, then outputs a first reflected wave detection signal indicating whether or not there is a detection target object in the first detection area based on reflected waves of the respective microwaves from the detection target object present in the first detection area, and outputs detection target object distance information corresponding to a distance to the detection target object,
a distance determination means for determining whether or not the distance to the detection target object is a predetermined distance or greater based on the detection target object distance information outputted from the first microwave sensor,
a second microwave sensor that sends a plurality of microwaves of different frequencies toward a second detection area that is set on a closer range side than the first detection area, then outputs a second reflected wave detection signal indicating whether or not there is a detection target object in the second detection area based on reflected waves of the respective microwaves from the detection target object present in the second detection area, and
an alarm signal output control means for performing control so that, in a case where the distance determination means determines that the distance to the detection target object is the predetermined distance or greater, an alarm signal is outputted only when the first reflected wave detection signal indicates a presence of a detection target object, and in a case where the second reflected wave detection signal indicates a presence of a detection target object, the alarm signal is outputted regardless of a determination result of the distance determination means.
